# EUROPÄISCHE PATENTSCHRIFT

(11) **EP 2 742 192 B1**
(45) Veröffentlichungstag und Bekanntmachung des Hinweises auf die Patenterteilung: **03.05.2017**
(21) Anmeldenummer: 12755774.2
(22) Anmeldetag: 06.08.2012
(51) Int. Cl.: E04B 1/76, E04F 13/08

(54) **WÄRMEDÄMMVERBUNDSYSTEM, GEBÄUDE MIT EINEM SOLCHEN SYSTEM UND VERFAHREN ZUM ERSTELLEN EINES WÄRMEDÄMMVERBUNDSYSTEMS**
THERMAL INSULATION COMPOUND SYSTEM, BUILDING WITH SUCH A SYSTEM AND METHOD FOR PRODUCING A THERMAL INSULATION COMPOUND SYSTEM
SYSTÈME COMPOSITE D'ISOLATION THERMIQUE, BÂTIMENT AVEC UN TEL SYSTÈME ET PROCÉDÉ DE MONTAGE D'UN SYSTÈME COMPOSITE D'ISOLATION THERMIQUE

(30) Priorität: 12.08.2011 EP 11405299
(43) Veröffentlichungstag der Anmeldung: 18.06.2014
(73) Patentinhaber: TheSwix Innovation AG, 6052 Hergiswil NW (CH)
(72) Erfinder: PLOZNER, Fabrizio, CH-4125 Riehen (CH)
(74) Vertreter: EGLI-EUROPEAN PATENT ATTORNEYS
(86) Internationale Anmeldenummer: PCT/CH2012/000181
(87) Internationale Veröffentlichungsnummer: WO 2013/023312

(56) Entgegenhaltungen:
- EP-A2- 1 818 467
- WO-A1-2009/127032
- DE-A1-102007 048 802

## Beschreibung

Die Erfindung betrifft ein Wärmedämmverbundsystem nach Anspruch 1, ein Gebäude nach Anspruch 24 und ein Verfahren zum Erstellen eines Wärmedämmverbundsystems nach Anspruch 25.

Es sind Wärmedämmverbundsysteme bekannt, bei welchen eine Mehrzahl von Wärmedämmkörpern, nebeneinander und übereinander angeordnet, an einer Aussenwand von einem Gebäude befestigt werden. Die Befestigung erfolgt mit Hilfe von Kleber und/oder Dübel, beispielsweise Thermo-Isolierdübel, auf dem bestehenden Untergrund der Aussenwand, beispielsweise Ziegel, Kalksandstein oder Beton. Die nach aussen gerichtete Fläche des Wärmedämmverbundsystems wird anschliessend mit einer Armierungsschicht versehen. Die Armierungsschicht besteht aus einem Armierungsmörtel, in dem ein Armierungsgewebe eingebettet wird. Das Armierungsgewebe ist im oberen Drittel der Armierungsschicht angeordnet. Den Abschluss des Systems bildet ein Aussenputz.

Es zeigt sich als nachteilig, dass das Verkleben der einzelnen Wärmedämmkörper sehr zeitaufwendig ist. Zudem muss die Aussenwand im Wesentlichen frei von Unebenheiten sein. Ein weiterer Nachteil besteht darin, dass ein fehlerhaft verklebter Wärmedämmkörper nicht mehr zerstörungsfrei von der Aussenwand entnommen werden kann.

Die Befestigung der einzelnen Wärmedämmkörper muss zudem sehr zuverlässig erfolgen, damit das Wärmedämmverbundsystem auch starken Windsoglasten widerstehen kann. Hierzu werden meist zusätzlich sogenannte Thermo-Isolierdübel durch die einzelnen Wärmedämmkörper und dann zur Fixierung in jeweils zuvor in die Aussenwand gebohrte Löcher eingeschlagen. Der zumeist tellerförmige Befestigungskopf dieser Thermo-Isolierdübel kommt nach dem Einschlagen auf der Aussenseite der Wärmedämmkörper zur Auflage.

Nachteilig hieran ist, dass über die Thermo-Isolierdübel jeweils Kältebrücken entstehen, welche die Wärmeisolationseigenschaft des Wärmedämmverbundsystems mindern. Ein weiterer Nachteil liegt darin, dass die Thermo-Isolierdübel sehr tief in das Mauerwerk der Aussenwand des Gebäudes eingeschlagen werden müssen, respektive sehr tiefe Löcher in das Mauerwerk gebohrt werden müssen. Diese Arbeit ist kraftaufwendig und zeitintensiv. Zudem wird hierdurch insbesondere bei Altbauten das Mauerwerk stark angegriffen. Ein weiterer Nachteil besteht darin, dass sich die tellerförmigen Befestigungsköpfe im Laufe der Zeit auf der fertigen Putzoberfläche abzeichnen. Nachteilig ist darüber hinaus, dass insbesondere am Randbereich von Gebäuden einer Traufhöhe von mehr als 20 m (aufgrund von dort zu erwartenden starken Windsoglasten) eine Verdübelung von 6 bis 10 Stück/m² erforderlich ist. Diese umfangreiche Arbeit der Verdübelung ist somit zeitaufwendig und insgesamt sehr teuer.

Es ist ein Wärmedämmverbundsystem bekannt, bei welchem Wärmedämmkörper mit Hilfe von Thermodübeln befestigt werden, wobei die Wärmedämmkörper an der jeweiligen Befestigungsstelle mit einer zumeist kreisrunden Ausnehmung versehen werden. Hierbei ist jeweils der Durchmesser dieser Ausnehmung grösser als der Durchmesser des Befestigungskopfes von einem jeweiligen Thermodübel. Der Thermodübel wird anschliessend derart tief in das Mauerwerk der Aussenwand des Gebäudes eingeschlagen, bis der Thermokopf gänzlich in die Ausnehmung eingebracht ist und an dem Material des Wärmedämmkörpers zum Anliegen kommt. Nachdem der Thermodübel eingebracht ist, wird die Aussparung mit einem passenden Abschlusselement, welches aus einem Material erstellt ist, welches dem Material des Wärmedämmkörper entspricht, in die Ausnehmung eingesetzt. Beispielsweise wird dieses Abschlusselement derart tief in die Aussparung eingesetzt, bis dessen Aussenfläche mit der Aussenfläche des Wärmedämmkörpers bündig abschliesst. Das Abschlusselement kann mit dem Wärmedämmkörper verklebt werden. Nachteilig hieran ist, dass die Aussparungen an Ort und Stelle in das Material des Wärmedämmkörpers eingebracht werden müssen. Diese Arbeit ist zeitintensiv. Ein weiterer Nachteil besteht darin, dass die wirksame Isolierdicke des Wärmedämmkörpers im Bereich der Aussparung zwangsläufig reduziert ist. Hierdurch wird die Isoliereigenschaft herabgesetzt.

Ein weiterer Nachteil der Befestigung der Wärmedämmkörper an der Aussenwand mittels Thermodübel bei einem Wärmedämmverbundsystem aus dem Stand der Technik besteht darin, dass für Wärmedämmkörper unterschiedlicher Dicke auch unterschiedlich lange Thermodübel verwendet werden müssen. Somit müssen Thermodübel unterschiedlicher Länge hergestellt, auf Lager gehalten und angeboten werden, wodurch die Kosten insgesamt erhöht werden.

Eine weitere Technik zum Befestigen von Wärmedämmkörpern eines Wärmedämmverbundsystems an Aussenwänden von Gebäuden besteht in der Verwendung von sogenannten Tragschienen. Die DE 299 11 643 U1 zeigt eine solche Tragschiene, welche als eine Winkelprofilschiene ausgebildet ist. Diese Schiene enthält einen Befestigungsschenkel zur Befestigung an einer Aussenwand. Ferner ist ein vom Befestigungsschenkel beabstandeter Halteschenkel zur Ineingriffnahme in einen Schlitz von einem Wärmedämmkörper bereitgestellt. Der Befestigungsschenkel und der Halteschenkel sind über ein Joch miteinander verbunden.

In Figur 1 dieser Druckschrift DE 299 11 643 U1 ist die Tragschiene an einer Aussenwand fixiert angezeigt. Es ist zu erkennen, dass der Befestigungsschenkel dazu ausgebildet ist, zugleich in die Schlitze von benachbarten Wärmedämmkörpern einzugreifen. Im montierten Zustand der Wärmedämmkörper an der Tragschiene sind erste Abschnitte der benachbarten Wärmedämmkörper, welche Abschnitte jeweils zwischen dem Schlitz und der zur Aussenwand gerichteten Fläche eines jeden Wärmedämmkörpers verlaufen, durch das Joch voneinander getrennt.

Es besteht bei bekannten Wärmedämmverbundsystemen ein Nachteil darin, dass zwischen zweiten Abschnitten der benachbarten Wärmedämmkörper, welche Abschnitte jeweils zwischen dem Schlitz und der von der Aussenwand abgewendeten Fläche eines jeden Wärmedämmkörpers verlaufen, ein Luftspalt gebildet ist. Die Breite dieses Luftspaltes, d.h. der Abstand zwischen den zuvor genannten zweiten Abschnitten von benachbarten Wärmedämmkörpern, entspricht hierbei der Dicke des Joches. Die Luftspalte zwischen jeweils benachbarten Wärmedämmkörpern bilden jeweils Kältebrücken. Als weiterhin nachteilig erweist es sich, dass die Isolierung zwischen den jeweils ersten Abschnitten der benachbarten Wärmedämmkörper lediglich durch das Material des Joches gebildet wird. Da das Material des Joches keine isolierenden Eigenschaften hat, kann von einer Isolierung keine Rede sein, so dass sich die Kältebrücke insgesamt über die gesamte Materialdicke der einzelnen Wärmedämmkörper erstreckt. Hierdurch wird die Wärmeisolationseigenschaft des gesamten Wärmedämmverbundsystems reduziert.

Es besteht ein weiteres Problem darin, dass eine jene Fixierung der Tragschiene an der Aussenwand, bei welcher Fixierung das Joch auch nur geringfügig von der horizontalen Ausrichtung abweicht, dazu führt, dass die Ausrichtung des hieran montierten Wärmedämmkörpers dieser Abweichung direkt folgt. Dies liegt darin begründet, dass das Joch mit seiner gesamten Fläche auf den jeweiligen Flächenbereichen der Oberseite und/oder Unterseite eines hieran montierten Wärmedämmkörpers aufliegt und diesen somit in Position drückt.

Die Ausrichtung des Jochs gibt somit unweigerlich die Ausrichtung des jeweils montierten Wärmedämmkörpers vor. Über die Länge einer Aussenwand betrachtet, setzt sich diese Abweichung gehebelt über alle Wärmedämmkörper fort. Nachteilig hieran ist, dass Abweichungen von der horizontalen, respektive vertikalen Anordnung der Wärmedämmkörper zu erhöhten Spaltmassen zwischen benachbarten Wärmedämmkörpern führen, welches die Wärmeisolationseigenschaft herabsetzt. Um dieses Problem zu vermeiden, müssten wiederum die einzelnen Tragschienen mit sehr exakt horizontal ausgerichtetem Joch an der Aussenwand fixiert werden. Diese hierzu besonders präzise Arbeit ist jedoch sehr zeitintensiv und kann nur durch besonders geschultes Fachpersonal durchgeführt werden. Ein weiteres bekanntes Wärmedämmverbundsystem beschreibt die WO 2009/127032 A1. Es ist Aufgabe der vorliegenden Erfindung ein Wärmedämmverbundsystem zu schaffen, welches schnell und einfach zu montieren ist, kostengünstig ist und verbesserte Wärmeisolationseigenschaften bereitstellt.

Diese Aufgabe wird durch ein Wärmedämmverbundsystem gemäss Patentanspruch 1 gelöst.

Bei dem Bestreben die Wärmedämmkörper zueinander nahtlos anzufügen, erweist sich der Verbindungssteg somit als nicht störend. Durch diese verblüffend einfache Lösung wird der ganz wesentliche Vorteil geschaffen, dass benachbarte Wärmedämmkörper, beispielsweise übereinander angeordnete Wärmedämmkörper, im befestigten Zustand vollständig aneinander anliegen. Ohne einen jeglichen Zwischenspalt fügen sich die Isolationsmaterialien der Wärmedämmkörper nahtlos aneinander an und bilden somit einen grossflächigen und einheitlich geschlossenen Isolationskörper, welcher hervorragende Wärmeisolationseigenschaften bietet.

Ferner rufen geringe Abweichungen von der exakt horizontalen, respektive vertikalen Ausrichtung der Befestigungsvorrichtung bei deren Fixierung an der Aussenwand keine Abweichungen von der exakt horizontalen, respektive vertikalen Ausrichtung der Wärmedämmkörper hervor. Vielmehr ist nunmehr ein gegenseitiges Nachjustieren der einzelnen Wärmedämmkörper auch im montierten Zustand an der Befestigungsvorrichtung ermöglicht. Somit ist die Bildung von Spalten zwischen jeweiligen Wärmedämmkörpern ausgeschlossen. Hieraus erwächst ein weiterer Vorteil darin, dass die Befestigungsvorrichtung sehr einfach und schnell an der Aussenwand befestigbar ist.

Zudem ist ein besonders zuverlässiger Halt der Wärmedämmkörper untereinander und zugleich mit der Aussenwand geschaffen. Ausserdem ist die Befestigungsvorrichtung aufgrund des vereinfacht gehaltenen Aufbaus in Massenherstellung sehr einfach und kostengünstig herstellbar.

Vorzugsweise ist der Verbindungssteg der Befestigungsvorrichtung dazu ausgebildet, bei der vollständigen Ineingriffnahme in den zweiten Schlitz des zumindest einen ersten Wärmedämmkörpers, mit einer Oberseite des mindestens einen ersten Wärmedämmkörpers bündig abzuschliessen. Hierdurch ist gewährleistet, dass das Volumen der Aussparung so gering wie möglich gehalten wird. Somit wird so wenig wie möglich an Isolationsmaterial entnommen, welches insgesamt zur Verbesserung der Wärmeisolationseigenschaft beiträgt.

Vorzugsweise ist der Verbindungssteg der Befestigungsvorrichtung dazu ausgebildet, bei der vollständigen Ineingriffnahme in den zweiten Schlitz des zumindest einen ersten Wärmedämmkörpers, gegen eine Unterseite von dem in den Wärmedämmkörper einbringbaren zweiten Schlitz anzuschlagen. Auch hierbei ist gewährleistet, dass das Volumen der Aussparung so gering wie möglich gehalten wird, indem so wenig wie möglich an Isolationsmaterial entnommen wird. Somit wird insgesamt eine hervorragende Wärmeisolationseigenschaft gewährleistet.

Vorzugsweise hat der Verbindungssteg der Befestigungsvorrichtung eine Länge in einem Bereich zwischen 4 cm und 6 cm. Es besteht ein Vorteil darin, dass die Länge des Verbindungsstegs, respektive der Abstand von der Fixierplatte zu der hierzu parallel ausgerichteten Einsteckplatte, über eine Vielzahl von Befestigungsvorrichtungen, auch zur Befestigung unterschiedlicher Wärmedämmkörper, welche sich in Dicke, Material oder weiteren Eigenschaften unterscheiden, stets konstant sein kann. Dieser Vorteil bezieht sich respektive auch auf die konstante Position des ersten und/oder von weiteren Schlitzen, parallel in Relation zu der zu der Aussenwand hin ausgerichteten Kante des Wärmedämmkörpers, welche Schlitze in das Material des Wärmedämmkörpers einbringbar sind oder eingebracht sind. Analog hierzu besteht insgesamt ein Vorteil der Befestigungsvorrichtung darin, dass auch bei der Befestigung unterschiedlicher Wärmedämmkörper, welche sich in der Dicke, beispielsweise 80, mm, 100 mm, 120 mm, 140 mm oder 160 mm, usw., unterscheiden und/oder im Material, beispielsweise Polystyrol, Polyurethan, Glasschaum, Mineralwolle, usw., unterscheiden, stets Befestigungsvorrichtungen mit identischen Ausmassen herangezogen werden können. Dies steht im Gegensatz zu der Befestigung aus dem Stand der Technik mittels Thermodübel, welche bei unterschiedlicher Dicke der Wärmedämmkörper auch unterschiedlich lang ausgebildet sein müssen. Ein Vorteil der erfindungsgemässen Befestigungsvorrichtung besteht somit darin, dass diese mit nahezu unveränderten Ausmassen in Massenherstellung hergestellt werden kann, wodurch die Herstellungskosten der erfindungsgemässen Befestigungsvorrichtung insgesamt reduziert werden. Auch reduzieren sich in Hinblick hierauf die Kosten in Bezug auf Transport und Lagerhaltung.

Vorzugsweise ist die Einsteckplatte derart ausgebildet, dass, bei vollständiger Ineingriffnahme mit dem mindestens einen ersten Wärmedämmkörper, ein zweiter Abschnitt von der Einsteckplatte über eine Fläche des Wärmedämmkörpers vorragt. Durch diese Ausgestaltung kann die Befestigungsvorrichtung zugleich mehrere Wärmedämmkörper halten.

Weiter vorzugsweise ist der zweite Abschnitt von der Einsteckplatte zur relativen Ineingriffnahme in einen mit der Dicke von der Einsteckplatte im Wesentlichen korrespondierenden Schlitz von zumindest einem zweiten Wärmedämmkörper ausgebildet, welcher oberhalb oder unterhalb von dem ersten Wärmedämmkörper plazierbar ist. Es besteht ein Vorteil darin, dass die Befestigungsvorrichtung somit beispielsweise die Oberseite von einem ersten Wärmedämmkörper und zugleich die Unterseite von einem oberhalb davon angefügten zweiten Wärmedämmkörper halten kann. Hierdurch kann insgesamt die Anzahl notwendiger Befestigungsvorrichtungen zum Ausbilden eines Wärmedämmverbundsystems reduziert werden, welches Vorteile hinsichtlich einer reduzierten Montagezeit und verringerter Kosten mit sich bringt. Der erste und/oder zweite Schlitz können im Verlauf der Herstellung des Wärmedämmkörpers in das Material des Wärmedämmkörpers eingebracht werden. Alternativ können der erste und/oder zweite Schlitz an Ort und Stelle, beispielsweise auf der Baustelle, in das Material eingebracht werden.

Vorzugsweise ist der Verbindungssteg plattenförmig ausgebildet. Durch diese Ausgestaltung ist eine zuverlässige Verbindung zwischen der Fixierplatte und der Einsteckplatte bei minimalem Materialaufwand gewährleistet. Insbesondere werden Kräfte, welche beim relativen Einführen der Einsteckplatte in den Schlitz des Wärmedämmkörpers oder beim Aufsetzen des Wärmedämmkörpers auf die Einsteckplatte der fixierten Befestigungsvorrichtung einwirken, direkt an die Fixierplatte überführt, ohne dass sich der plattenförmige Verbindungssteg in Richtung der Krafteinwirkung verbiegt. Zudem lässt sich eine derart ausgebildete Befestigungsvorrichtung besonders einfach und kostengünstig herstellen. Der als Ausnehmung ausgebildete einbringbare zweite Schlitz kann an Ort und Stelle mit Hilfe von einem Schneidwerkzeug in den Wärmedämmkörper eingebracht werden. Somit kann die Befestigungsposition der Befestigungsvorrichtung an der Aussenwand in horizontaler Richtung flexibel gewählt werden. Unterstützend zum Einbringen des als Ausnehmung ausgebildeten Schlitzes in den Wärmedämmkörper kann eine Schablone herangezogen werden. Vorzugsweise schliessen, in einem an der Aussenwand fixierten Zustand der Befestigungsvorrichtung, die jeweilige Unterseite von der Fixierplatte und/oder dem plattenförmigen Verbindungssteg und/oder der Einsteckplatte zueinander bündig ab. Eine derartige Konstruktion gewährleistet einen reduzierten Material- und Zeitaufwand bei der Herstellung der Befestigungsvorrichtung.
Vorzugsweise entspricht der Abstand zwischen der Fläche von der Fixierplatte und der Fläche von der Einsteckplatte gleich der Länge des in den Wärmedämmkörper einbringbaren zweiten Schlitzes. Durch diese Ausgestaltung wird sichergestellt, dass der Wärmedämmkörper im eingesetzten Zustand in die Befestigungsvorrichtung zwischen den planparallelen Flächen der Fixierplatte und der Einsteckplatte besonders zuverlässig und ohne Spiel gehalten wird.
Vorzugsweise ist, in einem an der Aussenwand fixierten Zustand der Befestigungsvorrichtung, die Einsteckplatte an der Oberseite und/oder Unterseite mit dreieckförmigen Ausnehmungen ausgebildet. Beispielsweise können die Oberseite und/oder Unterseite durchgehend gezackt ausgebildet sein. Diese Ausgestaltung ermöglicht ein besonders einfaches und schnelles Einführen der Einsteckplatte in den ersten Schlitz eines Wärmedämmkörpers, respektive ein besonders einfaches und schnelles Aufsetzen des ersten Schlitzes eines benachbarten Wärmedämmkörpers über die Einsteckplatte. Diese Ausgestaltung ermöglicht ferner das Einbringen von Markierungen auf die Oberfläche des Wärmedämmkörpers, indem die Befestigungsvorrichtung mit der gezackt ausgebildeten Oberseite und/oder Unterseite der Einsteckplatte vor der Montage an den Wärmedämmkörper gedrückt wird. Die jeweils gezackte Seite hinterlässt dann die Markierungen am Wärmedämmkörper, anhand derer die Position des in das Material des Wärmedämmkörpers einbringbaren ersten Schlitzes bestimmbar ist. Der Schlitz kann an Ort und Stelle mittels eines Messers mit beispielsweise geriffelter Schneide in das Material des Wärmedämmkörpers eingebracht werden. Alternativ kann der Schlitz im Verlauf der Herstellung des Wärmedämmkörpers in das Material eingebracht werden.

Vorzugsweise ist der Verbindungssteg, in einem an der Aussenwand fixierten Zustand der Befestigungsvorrichtung, an der Unterseite mit dreieckförmigen Ausnehmungen ausgebildet. Beispielsweise kann die Unterseite des Verbindungsstegs, ähnlich der vorherigen Ausführungsform, durchgehend gezackt ausgebildet sein. Diese Ausgestaltung ermöglicht ein besonders einfaches und schnelles Einführen des Verbindungsstegs in die korrespondierende zweite Ausnehmung eines Wärmedämmkörpers. Diese Ausgestaltung ermöglicht ferner das Einbringen von Markierungen auf der Oberfläche des Wärmedämmkörpers, indem die Befestigungsvorrichtung mit der gezackt ausgebildeten Unterseite des Verbindungsstegs vor der Montage an den Wärmedämmkörper gedrückt wird. Die gezackte Unterseite hinterlässt dann Markierungen am Wärmedämmkörper, anhand derer die Position der in das Material des Wärmedämmkörpers einbringbaren Ausnehmung bestimmbar ist. Die Ausnehmung kann an Ort und Stelle mittels eines Messers mit beispielsweise geriffelter Schneide in das Material des Wärmedämmkörpers eingebracht werden.

Vorzugsweise ist die Fixierplatte mit zumindest einer Bohrung versehen, durch welche hindurch ein Fixierelement zur Fixierung der Befestigungsvorrichtung an der Aussenwand einführbar ist. Hierdurch kann die Fixierplatte schnell, einfach und kostengünstig mittels beispielsweise einer Schrauben-Dübel-Anordnung oder eines Schlagdübels an der Aussenwand befestigt werden.

Vorzugsweise ist die Einsteckplatte der Befestigungsvorrichtung mit Durchgangsbohrungen zur Abfuhr von durch Wasserdampfdiffusion gebildetem Wasserdampf versehen. Durch das Vorsehen der Durchgangsbohrungen wird das Ansammeln von Wasser innerhalb des Wärmedämmkörpers unterbunden.

Vorzugsweise ist die Befestigungsvorrichtung aus Metall oder Kunststoff erstellt. Bei einer Verwendung von Metall ist der Gebrauch von rostfreiem Stahl bevorzugt um somit der Bildung von Rost entgegenzutreten. Die Befestigungsvorrichtung kann vorteilhafterweise mittels Stanzen und Abkanten von einer entsprechend vorbereiteten Metallplatte hergestellt werden. Bei der Verwendung von Kunststoff als Material der Befestigungsvorrichtung ist eine lange Lebensdauer gewährleistet. Ferner sind die Materialkosten niedrig gehalten. Als Kunststoff zur Herstellung der Befestigungsvorrichtung kann beispielsweise Polykarbonat gewählt werden.

Vorzugsweise weist die Einsteckplatte der Befestigungsvorrichtung eine Länge zwischen 8 cm und 12 cm auf und eine Breite zwischen 4 cm und 6 cm auf. Eine Einsteckplatte mit solchen Ausmassen hat sich in Bezug auf den Materialeinsatz als besonders vorteilhaft erwiesen. Es sind selbstverständlich Befestigungsvorrichtungen mit Einsteckplatten vorstellbar, welche andere Ausmasse haben.

Vorzugsweise ist der Verbindungssteg der Befestigungsvorrichtung mittig zur Einsteckplatte mit dieser verbunden. Ein solch symmetrischer Aufbau gewähreistet günstige Herstellungskosten.

Alternativ vorzugsweise ist der Verbindungssteg zwischen 1 cm und 2 cm zur Mitte der Einsteckplatte versetzt mit dieser verbunden. Eine derartige Ausgestaltung trägt dem Umstand Rechnung, nach welchem vermieden werden sollte, dass der Verbindungssteg der Befestigungsvorrichtung inmitten von zwei horizontal benachbarten Wärmedämmkörpern positioniert wird. Es ist vielmehr bevorzugt, dass der Verbindungssteg links oder rechts von einem Wärmedämmkörper mit einem Abstand von mindestens 1 cm von der Seitenkante des Wärmedämmkörpers entfernt in eine jeweils korrespondierende Ausnehmung eingebracht wird. Hierdurch wird vermieden, dass die jeweils horizontal zueinander benachbarten Wärmedämmkörper bei einer Distanz entsprechend der Dicke des Materials des Verbindungsstegs beabstandet sind, welche Beabstandung eine Kältebrücke bilden würde. Unter Einhaltung des Vorherigen sind die Wärmedämmkörper auch in horizontaler Ausrichtung stets nahtlos zueinander angeordnet, welches eine zufriedenstellende Isolierung garantiert. Durch die zuvor genannte Positionierung einzelner Befestigungsvorrichtungen nahe der Seitenkannte eines jeweiligen Wärmedämmkörpers kann eine einzelne Befestigungsvorrichtung in bevorzugter Weise die Eckbereiche von drei einzelnen Wärmedämmkörpern halten, welche in horizontaler Reihe zueinander versetzt angeordnet sind. Unter Berücksichtigung dieser Anordnungsweise kann die Anzahl der notwendigen Befestigungsvorrichtungen reduziert werden. Hierdurch werden Kosten und Montagezeit reduziert. Im Hinblick auf das Vorherige ist es bevorzugt, den Verbindungssteg zwischen 1 cm und 2 cm zur Mitte der Einsteckplatte versetzt mit dieser zu verbinden. Hierdurch sind auch bei der zur Seitenkante eines Wärmedämmkörpers versetzten Anordnung der Befestigungsvorrichtung gleichzeitig identisch lange Abschnitte der Einsteckplatte der einzelnen Befestigungsvorrichtung in zwei zueinander horizontal benachbarte Wärmedämmkörper eingebracht. Hierdurch kann insgesamt eine bestmögliche Befestigung erzielt werden.

Der Wärmedämmkörper ist an seiner Oberseite und/oder Unterseite mit einem ersten Schlitz vorbereitet. Die Ausnehmung zur Aufnahme des Verbindungsstegs kann beispielsweise in situ, an Ort und Stelle der Montage, in den Wärmedämmkörper eingebracht werden. Alternativ kann dieser zweite Schlitz im Zuge der Herstellung des Wärmedämmkörpers in diesen eingebracht werden.
Vorzugsweise ist der Wärmedämmkörper aus synthetisch organischen Dämmstoffen, insbesondere Polystyrol-Hartschaum, Polystyrolpartikel-Schaum, Polystyrolextruder-Schaum, Polyurethan-Hartschaum und dergleichen, oder aus synthetisch anorganischen Dämmstoffen, insbesondere Mineralwolle, Mineralschaum, Schaumglas und dergleichen, hergestellt. Diese Materialien bieten hervorragende Wärmeisolationseigenschaften. Der Wärmedämmkörper kann ferner zusätzlich oder alternativ zur Schalldämmung ausgebildet sein. Ferner sind Wärmedämmkörper mit einer Beschichtung verwendbar. Der Vorteil der Erfindung kommt insbesondere bei Wärmedämmkörpern mit Beschichtung und bei Wärmedämmkörpern mit einem Material aus Schaumglas zum Tragen. Insbesondere diese Wärmedämmkörper kommen aufgrund ihrer hervorragenden Wärmeisolationseigenschaft bzw. ihrer im Vergleich zu herkömmlichen Wärmedämmkörpern reduzierten Dicke vermehrt zum Einsatz. Diese Wärmedämmkörper sollten bzw. dürfen jedoch nicht durchbohrt werden, beispielsweise zum Durchstecken eines Thermodübels aus dem Stand der Technik, wie zuvor beschrieben. Ein Durchbohren eines Wärmedämmkörpers mit einer Beschichtung würde die Wärmeisolationseigenschaft dieses Wärmedämmkörpers drastisch reduzieren. Ein Durchbohren eines Wärmedämmkörpers mit einem Material aus Schaumglas würde unweigerlich dessen Zerstörung hervorrufen. Die vorliegende Erfindung erlaubt hingegen eine zuverlässige Befestigung von Wärmedämmkörpern ohne diese durchbohren zu müssen. Somit werden die oben aufgeführten Nachteile aus dem Stand der Technik vorteilhafterweise umgangen.

Vorzugsweise sind die Vielzahl von Wärmedämmkörpern übereinander und nebeneinander angeordnet. Ein derartiges Wärmedämmverbundsystem kann schnell und einfach mit geringen Kosten an der Aussenwand und/oder Innenwand und/oder Decke (Unterschicht) eines Gebäudes angebracht werden. Gleichzeitig gewährleistet das Wärmedämmverbundsystem eine hervorragende Wärmeisolationseigenschaft. Somit können die Heizenergiekosten des Gebäudes reduziert werden.

Vorzugsweise enthält das Wärmedämmverbundsystem ferner wenigstens ein Isolationselement, welches in einem Bereich zwischen den übereinander und/oder nebeneinander angeordneten Wärmedämmkörpern und der Aussenwand positioniert ist. Hierdurch wird durch die wechselweise angeordneten Isolationselemente eine Luftzirkulation in einem Bereich (Hohlraum) zwischen den Wärmedämmkörpern und der Aussenwand unterbunden. Ein Vorteil besteht darin, dass die Wärmeisolationseigenschaft somit weiter verbessert wird. Ein weiterer Vorteil besteht darin, dass im Falle eines Brandes nur vermindert Sauerstoff an den Brandherd zugeführt wird und zudem das Entweichen giftiger Dämpfe reduziert wird.

Vorzugsweise ist das Isolationselement aus einem schlauchförmigen elastischen Material erstellt, welches dazu ausgelegt ist, in einem Zwischenraum zwischen dem Wärmedämmkörper und der Aussenwand des Gebäudes elastisch eingespannt zu werden. Ein Vorteil dieser Ausführungsform besteht darin, dass das Isolationselement alleine durch Klemmkraft selbsthaltend ist. Zudem können jederzeit Nachjustierungen vorgenommen werden.

Alternativ vorzugsweise ist das Isolationselement aus einem elastischen Material erstellt, welches an zumindest einer Seite mit einer Klebefläche versehen ist, wobei das Isolationselement dazu ausgelegt ist, mittels der Klebefläche mit einer der Aussenwand des Gebäudes zugewandten Fläche des Wärmedämmkörpers verklebt zu werden. Ein Vorteil dieser Ausführungsform besteht darin, dass das Isolationselement schon im Vorfeld der Montage der Wärmedämmkörper an diese geklebt werden kann. Beispielsweise kann das Isolationselement entlang der Kantenbereiche der einzelnen Wärmedämmkörper verklebt werden.

Vorzugsweise enthält das Wärmedämmverbundsystem ferner einen Unterlegkeil, welcher dazu ausgelegt ist, zwischen der Fixierplatte und der Aussenwand des Gebäudes zwischengesetzt zu werden und einen Winkel zwischen der Fixierplatte und der Aussenwand des Gebäudes einzustellen. Somit können die Befestigungsvorrichtungen voneinander separat exakt positioniert und ausgerichtet werden, so dass später die Aussenflächen der einzelnen Wärmedämmkörper zueinander stets bündig sind. Zudem wird ein Verkanten von einzelnen Wärmedämmkörpern zueinander vermieden, welches die Wärmeisolationseigenschaft des gesamten Wärmedämmverbundsystems herabsetzen würde.

Die zuvor genannte Aufgabe wird zudem durch ein Gebäude nach Patentanspruch 24 gelöst. Ein mit einem Wärmedämmverbundsystem nach einem der Patentansprüche 1 bis 23 wärmeisoliertes Gebäude hat eine hervorragende Wärmeisolationseigenschaft, welche bei nur geringem Materialeinsatz, in kurzer Zeit und mit geringen Kosten geschaffen ist. Hierdurch kann das Gebäude mit reduziertem Energieeintrag geheizt werden, da die Wärme innerhalb des Gebäudes nur sehr vermindert über die Aussenwände an die Umgebung entweicht. Hierdurch werden Kosten eingespart und massgebliche Energieeinspar-Richtlinien, beispielsweise Richtlinien im Hinblick auf die Minergie-Bauweise, erfüllt.

Die zuvor genannte Aufgabe wird zudem durch ein Verfahren zum Erstellen eines Wärmedämmverbundsystems nach einem der Ansprüche 1 bis 23 gelöst. Bei diesem Verfahren wird der wenigstens eine zweite Schlitz an Ort und Stelle, beispielsweise auf der Baustelle, in einen jeweiligen Wärmedämmkörper eingebracht. Hierzu kann eine vorbereitete Schablone unterstützen, welche, an den Wärmedämmkörper angesetzt, zur Führung eines Messers dienen kann, mit welchem der zweite Schlitz in das Material des Wärmedämmkörpers eingebracht wird. Alternativ kann die Ausnehmung bereits im Verlauf der Herstellung des Wärmedämmkörpers in das Material davon eingebracht sein. Ferner werden die Befestigungsvorrichtung und der Wärmedämmkörper derart in relative Ineingriffnahme gebracht, dass die Fixierplatte in den ersten Schlitz und der Verbindungssteg vollständig in den zweiten Schlitz eingreifen. Ferner wird die Fixierplatte der mit dem Wärmedämmkörper in Eingriff gebrachten Befestigungsvorrichtung an der Aussenwand des Gebäudes fixiert.

Im Folgenden wird die Erfindung anhand eines Ausführungsbeispiels näher erläutert. Hierbei zeigen:
- Figur 1: eine Befestigungsvorrichtung in Perspektivansicht;
- Figur 2: einen Ausschnitt von einem Wärmedämmkörper, welcher durch eine Befestigungsvorrichtung an der Aussenwand von einem Gebäude fixiert ist; und
- Figur 3: einen Ausschnitt von einem an der Aussenwand eines Gebäudes befestigten Wärmedämmverbundsystem.

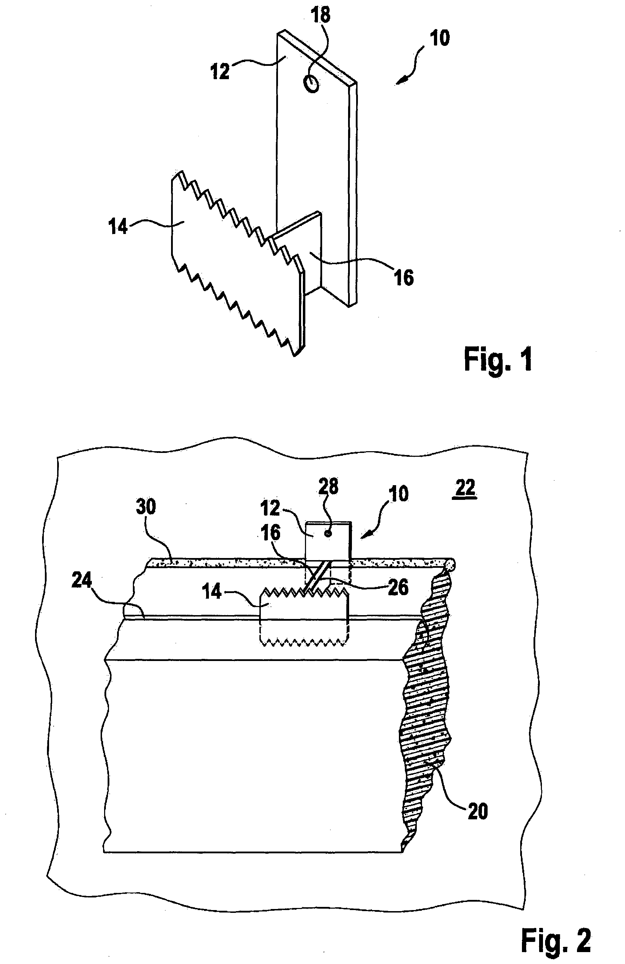

Figur 1 zeigt eine Befestigungsvorrichtung 10 in Perspektivansicht. Die Befestigungsvorrichtung 10 enthält eine Fixierplatte 12 zum Fixieren der Befestigungsvorrichtung 10 an einer Aussenwand eines Gebäudes (nicht gezeigt). Eine Einsteckplatte 14 ist über einen Verbindungssteg 16 mit der Fixierplatte 12 verbunden, wobei die Platten 12, 14 zueinander planparallel angeordnet sind. Die Einsteckplatte 14 dient zur relativen Ineingriffnahme, zumindest abschnittsweise, in einen Schlitz, welcher in einem Wärmedämmkörper (beide nicht gezeigt) eingebracht ist. Somit können die Einsteckplatte 14 und der Schlitz relativ zueinander in Eingriff gebracht werden.

Unter dem Begriff "relative Ineingriffnahme" ist hierbei einerseits zu verstehen, dass die Einsteckplatte 14 in den Schlitz eines (statischen) Wärmedämmkörpers eingeführt werden kann. Andererseits ist unter diesem Begriff zu verstehen, dass ein Wärmedämmkörper über seinen Schlitz auf die (statische) Einsteckplatte 14 aufgesetzt werden kann.

Die Fixierplatte 12 enthält eine Bohrung 18, durch welche hindurch ein Fixierelement (nicht gezeigt) zur Fixierung an der Aussenwand einführbar ist. Die relative Ineingriffnahme zwischen dem Schlitz eines jeweiligen Wärmedämmkörpers und der Einsteckplatte 14 wird ferner unterstützt, indem die untere und/oder obere Längsseite der Einsteckplatte 14 gezackt ausgebildet ist bzw. sind.

Figur 2 zeigt schematisch einen Ausschnitt von einem Wärmedämmkörper 20, welcher durch die in Figur 1 gezeigte Befestigungsvorrichtung 10 an einer Aussenwand 22 von einem Gebäude fixiert ist. An der Oberseite des Wärmedämmkörpers 20 ist ein in Längsrichtung verlaufender Schlitz 24 in das Material des Wärmedämmkörpers 20 eingebracht. In den Schlitz 24 ist ein unterer (erster) Abschnitt der Einsteckplatte 14 eingesetzt. Die Dicke des Schlitzes 24 korrespondiert hierbei mit der Dicke der Einsteckplatte 14. Hierdurch wird ein fester Halt zwischen der Befestigungsvorrichtung 10 und dem Wärmedämmkörper 20 gewährleistet.

Der Verbindungssteg 16 ist wiederum vollständig in eine Ausnehmung 26 des Wärmedämmkörpers 20 eingesetzt, welche in den Wärmedämmkörper 20 eingebracht ist oder an Ort und Stelle einbringbar ist. Hierbei ragt keinerlei Abschnitt des Verbindungssteges 16 oberhalb von der Oberseite des Wärmedämmkörpers 20 hervor. Somit wird vermieden, dass ein Spalt zwischen diesem Wärmedämmkörper 20 und einem oberhalb davon zu platzierenden weiteren Wärmedämmkörper (nicht gezeigt) gebildet wird. Mit anderen Worten wird somit sichergestellt, dass sich übereinander angeordnete Wärmedämmkörper zueinander nahtlos, ohne einen jeglichen Spalt, anschliessen. Diese Anordnung garantiert hervorragende Wärmeisolationseigenschaften.

Als ein Beispiel kann der Verbindungssteg 16 als ein plattenförmiger Körper ausgebildet sein, dessen untere Seite mit der unteren Seite von der Einsteckplatte 14 bündig abschliesst. In diesem Beispiel ist die Ausnehmung 26 als ein Schlitz ausgebildet, dessen Dicke mit der Dicke des plattenförmigen Verbindungssteges 16 übereinstimmt. In diesem Beispiel sind ferner dieser Schlitz (Ausnehmung 26) und der Schlitz 24 identisch tief in das Material des Wärmedämmkörpers 20 eingebracht. Ferner schliesst die obere Seite des Verbindungsstegs 16 bündig mit der Oberseite des Wärmedämmkörpers 20 ab. Somit ist der Materialabtrag für die Ausnehmung 26 auf das Minimum reduziert, wodurch die Wärmeisolationseigenschaft maximiert wird. Zusätzlich wird ein fester Halt zwischen der Befestigungsvorrichtung 10 und dem Wärmedämmkörper 20 gewährleistet.

Der in den Wärmedämmkörper 20 als Ausnehmung 26 eingebrachte Schlitz erstreckt sich durchgängig vom Schlitz 24 zu jener Fläche des Wärmedämmkörpers 20, welche im montierten Zustand der Aussenwand 22 zugewandt ist. Die Länge des als Ausnehmung 26 eingebrachten Schlitzes entspricht hierbei dem Abstand zwischen den Flächen der Einsteckplatte 14 und der Fixierplatte 12. Somit sind Materialabschnitte der Oberseite des Wärmedämmkörpers 20 fest zwischen der Einsteckplatte 14 und der Fixierplatte 12 eingespannt. Hierdurch wird ein weiterer fester Halt zwischen der Befestigungsvorrichtung 10 und dem Wärmedämmkörper 20 gewährleistet.

Wie in der Figur 2 schematisch gezeigt, steht der untere (erste) Abschnitt der Einsteckplatte 14 mit dem Schlitz 24 des Wärmedämmkörpers 20 in Eingriff. Ein oberer (zweiter) Abschnitt der Einsteckplatte 14 ragt über die Oberseite dieses Wärmedämmkörpers 20 hervor. Dieser obere Abschnitt der Einsteckplatte 14 kann wiederum mit einem Schlitz eines weiteren Wärmedämmkörpers (beide nicht gezeigt) in Eingriff gebracht werden, welcher oberhalb des Wärmedämmkörpers 20 zu platzieren ist. Durch diese Funktion der doppelten Ineingriffnahme kann insgesamt die Anzahl notwendiger Befestigungsvorrichtungen reduziert werden. Hierdurch werden Montagezeit und Kosten gespart. Zur Befestigung einer unteren (ersten) Lage von Wärmedämmkörpern kann vorgesehen sein, dass diese Wärmedämmkörper jeweils an Ihrer Bodenseite ebenfalls mit einer Ausnehmung zur Aufnahme eines Verbindungsstegs und einem Schlitz zur Aufnahme einer Einsteckplatte von einer Befestigungsvorrichtung bereitgestellt sind. Hierbei sind lediglich diese am Bodenbereich der Aussenwand zu montierenden Befestigungsvorrichtungen derart ausgestaltet, dass die Ober- und Unterseite der Einsteckplatte mit der Ober- und Unterseite des Verbindungsstegs bündig abschliessen.

Wie in Figuren 1 und 2 zu erkennen, sind die obere und untere Längsseite von der Einsteckplatte 14 gezackt ausgeformt. Durch diese Ausgestaltung wird die relative Ineingriffnahme zwischen den Schlitzen von jeweiligen Wärmedämmkörpern und der Einsteckplatte 14 erleichtert. Durch die gezackte Ausformung greifen die Zacken in das zumeist elastische Material des Wärmedämmkörpers ein und sichern diesen somit zuverlässiger gegen eine Längsverschiebung in horizontaler Richtung. Die Fixierplatte 12 ist ferner mit einer Bohrung (in Figur 1 gezeigt) versehen, durch welche ein Fixierelement 28 zur Fixierung an der Aussenwand 22 gesteckt ist.

In einem Bereich zwischen übereinander angeordneten Wärmedämmkörpern und der Aussenwand 22 ist wenigstens ein Isolationselement 30 positioniert. Dieses Isolationselement 30 kann aus einem elastischen und porösen Material, beispielsweise Schaumstoff, erstellt sein, welches sich gut in den zuvor genannten Bereich einfügen lässt und eine Luftzirkulation in dem Bereich zwischen den Wärmedämmkörpern und der Aussenwand reduziert. Somit wird die Wärmeisolationseigenschaft erhöht. Ferner wird im Falle eines Feuers die Zufuhr von Sauerstoff an den Brandherd unterbunden. Zusätzlich wird das Austreten von giftigen Dämpfen verhindert. Beispielsweise kann das Isolationselement 30 schlauchförmig ausgebildet sein, welcher Schlauch elastisch eingespannt zwischen dem jeweiligen Wärmedämmkörper 30 und der Aussenwand 22 eingeklemmt wird. Alternativ kann das Isolationselement 30 mit einer Klebefläche versehen sein, mittels derer das Isolationselement 30 an die Rückseite des jeweiligen Wärmedämmkörpers 20 verklebt wird. Bei beiden Ausgestaltungen ist darauf zu achten, dass das Isolationselement 30 an der Befestigungsposition von der Fixierplatte 12 an der Aussenwand 22 unterbrochen ist.

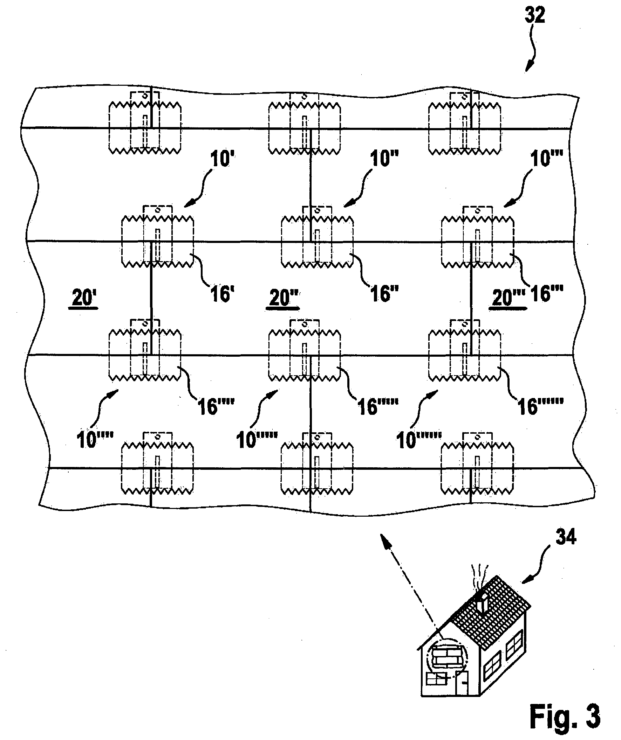

Figur 3 zeigt einen schematischen Ausschnitt eines Wärmeverbundsystems 32, welches an der Aussenwand eines Gebäudes 34 montiert ist. Wie zu erkennen, sind die einzelnen Wärmedämmkörper, welche quaderförmig ausgebildet sind, jeweils zueinander in Längsrichtung ausgerichtet angeordnet. Die jeweils direkt über- und untereinander angeordneten Wärmedämmkörper sind hierbei zueinander versetzt angeordnet. Hierdurch wird vermieden, dass sich eine durchgängige vertikale Fuge bildet, welche die Wärmeisolationseigenschaft des Wärmeverbundsystems 32 herabsetzten würde. Obwohl durch Wärmedämmmaterial verdeckt, sind Befestigungsvorrichtungen 10' - 10'''''' schematisch angezeigt, welche jeweils nebeneinander angeordnete Wärmedämmkörper 20', 20'' und 20''' und zugleich oberhalb und unterhalb davon angeordnete Wärmedämmkörper in Eingriff nehmen und an der Aussenwand befestigen.

Wie beispielsweise in der Figur gezeigt, sind drei Befestigungsvorrichtungen 10', 10'' und 10''' in Relation zu einem Wärmedämmkörper 20'' an einem oberen Randbereich davon positioniert und sind drei Befestigungsvorrichtungen 10'''', 10''''' und 10'''''' in Relation zu dem Wärmedämmkörper 20'' an einem unteren Randbereich davon positioniert. Durch diese Anordnung wird die Anzahl notwendiger Befestigungsvorrichtungen weiter reduziert.

Bei der Anordnung zwischen den Befestigungsvorrichtungen 10' - 10'''''' und den Wärmedämmkörpern 20', 20'' und 20''' in Relation zueinander ist zu vermeiden, dass der Verbindungssteg 16', 16''', 16'''' und 16'''''' der jeweiligen Befestigungsvorrichtungen 10', 10''', 10'''' und 10'''''' innerhalb der Nahtstelle (Fuge) zwischen nebeneinander benachbarten Wärmedämmkörpern 20', 20'' und 20''' positioniert wird. Somit wird sichergestellt, dass sich auch nebeneinander angeordnete Wärmedämmkörper zueinander nahtlos, ohne einen jeglichen Spalt, anfügen, welches eine gute Wärmeisolationseigenschaft sicherstellt.

Das Wärmedämmverbundsystem 32 ist schnell und einfach bei reduzierten Kosten zu montieren und bietet zugleich besonders hervorragende Wärmeisolationseigenschaften, da die einzelnen Wärmedämmkörper zueinander nahtlos, ohne einen jeglichen Spalt, angefügt sind. Somit können die Heizenergiekosten des Gebäudes 34 reduziert werden.

## Patentansprüche

1. Wärmedämmverbundsystem (32), umfassend eine Vielzahl von plattenförmigen Wärmedämmkörpern (20) und eine Vielzahl von Befestigungsvorrichtungen (10) zum Befestigen der Wärmedämmkörper (20) an einer Aussenwand (22) und/oder Innenwand und/oder Decke eines Gebäudes (34), wobei jede der Befestigungsvorrichtungen (10) eine Fixierplatte (12) zum Fixieren der Befestigungsvorrichtung (10) an der Aussenwand (22), einen an einer Flächenseite der Fixierplatte (12) angebrachten Verbindungssteg (16), und eine Einsteckplatte (14), welche über den Verbindungssteg (16) in einer Ebene im Wesentlichen parallel zur Fixierplatte (12) an dieser befestigt ist, enthält; und in jedem der Wärmedämmkörper (20) wenigstens ein mit der Dicke von der Einsteckplatte (14) im Wesentlichen korrespondierenden ersten Schlitz (24) eingebracht ist; wobei zumindest ein erster Abschnitt von der Einsteckplatte (14) zur relativen Ineingriffnahme in den ersten Schlitz (24) von zumindest einem ersten der Wärmedämmkörper (20) ausgebildet ist; **dadurch gekennzeichnet, dass** im eingebauten Zustand der Verbindungssteg (16) in vollständiger relativer Ineingriffnahme mit einem mit der Dicke von dem Verbindungssteg (16) im Wesentlichen korrespondierenden zweiten Schlitz (26) des zumindest einen ersten Wärmedämmkörpers (20) steht, welcher senkrecht zum ersten Schlitz (24) ausgerichtet in den Wärmedämmkörper (20) einbringbar oder eingebracht ist.

2. Wärmedämmverbundsystem (32) nach Anspruch 1, bei welchem der Verbindungssteg (16) der Befestigungsvorrichtung (10) dazu ausgebildet ist, bei der vollständigen Ineingriffnahme in den zweiten Schlitz (26) des zumindest einen ersten Wärmedämmkörpers (20), mit einer Oberseite des mindestens einen ersten Wärmedämmkörpers (20) bündig abzuschliessen.

3. Wärmedämmverbundsystem (32)nach Anspruch 1 oder 2, bei welchem der Verbindungssteg (16) der Befestigungsvorrichtung (10) dazu ausgebildet ist, bei der vollständigen Ineingriffnahme in den zweiten Schlitz (26) des zumindest einen ersten Wärmedämmkörpers (20), gegen eine Unterseite von dem in den Wärmedämmkörper (20) einbringbaren zweiten Schlitz (26) anzuschlagen.

4. Wärmedämmverbundsystem (32) nach einem der vorhergehenden Ansprüche, bei welchem der Verbindungssteg (16) der Befestigungsvorrichtung (10) eine Länge in einem Bereich zwischen 4 cm und 6 cm hat.

5. Wärmedämmverbundsystem (32) nach einem der vorhergehenden Ansprüche, bei welchem die Einsteckplatte (14) derart ausgebildet ist, dass, bei vollständiger Ineingriffnahme mit dem mindestens einen ersten Wärmedämmkörper (20), ein zweiter Abschnitt von der Einsteckplatte (14) über eine Fläche des Wärmedämmkörpers (20) vorragt.

6. Wärmedämmverbundsystem (32) nach Anspruch 5, bei welchem der zweite Abschnitt von der Einsteckplatte (14) zur relativen Ineingriffnahme in einen mit der Dicke von der Einsteckplatte (14) im Wesentlichen korrespondierenden Schlitz von zumindest einem zweiten Wärmedämmkörper ausgebildet ist, welcher oberhalb oder unterhalb von dem ersten Wärmedämmkörper (20) plazierbar ist.

7. Wärmedämmverbundsystem (32) nach einem der vorhergehenden Ansprüche, bei welchem der Verbindungssteg (16) plattenförmig ausgebildet ist.

8. Wärmedämmverbundsystem (32) nach Anspruch 7, bei welchem, in einem an der Aussenwand (22) fixierten Zustand der Befestigungsvorrichtung (10), die jeweilige Unterseite von der Fixierplatte und/oder dem plattenförmigen Verbindungssteg (16) und/oder der Einsteckplatte (14) zueinander bündig abschliessen.

9. Wärmedämmverbundsystem (32) nach einem der vorhergehenden Ansprüche, bei welchem der Abstand zwischen der Fläche von der Fixierplatte (12) und der Fläche von der Einsteckplatte (14) gleich der Länge des in den Wärmedämmkörper (20) einbringbaren zweiten Schlitzes (26) entspricht.

10. Wärmedämmverbundsystem (32) nach einem der vorhergehenden Ansprüche, bei welchem die Einsteckplatte (14), in einem an der Aussenwand (22) fixierten Zustand der Befestigungsvorrichtung (10), an der Oberseite und/oder Unterseite mit dreieckförmigen Ausnehmungen ausgebildet ist.

11. Wärmedämmverbundsystem (32) nach einem der vorhergehenden Ansprüche, bei welchem der Verbindungssteg (16), in einem an der Aussenwand (22) fixierten Zustand der Befestigungsvorrichtung (10), an der Unterseite mit dreieckförmigen Ausnehmungen ausgebildet ist.

12. Wärmedämmverbundsystem (32) nach einem der vorhergehenden Ansprüche, bei welchem die Fixierplatte (14) mit zumindest einer Bohrung (18) versehen ist, durch welche hindurch ein Fixierelement (28) zur Fixierung der Befestigungsvorrichtung (10) an der Aussenwand (22) einführbar ist.

13. Wärmedämmverbundsystem (32) nach einem der vorhergehenden Ansprüche, bei welchem die Einsteckplatte (14) der Befestigungsvorrichtung (10) mit Durchgangsbohrungen zur Abfuhr von durch Wasserdampfdiffusion gebildetem Wasserdampf versehen ist.

14. Wärmedämmverbundsystem (32) nach einem der vorhergehenden Ansprüche, bei welchem die Befestigungsvorrichtung (10) aus Metall oder Kunststoff erstellt ist.

15. Wärmedämmverbundsystem (32) nach einem der vorhergehenden Ansprüche, bei welchem die Einsteckplatte (14) der Befestigungsvorrichtung (10) eine Länge zwischen 8 cm und 12 cm aufweist und eine Breite zwischen 4 cm und 6 cm aufweist.

16. Wärmedämmverbundsystem (32) nach einem der vorhergehenden Ansprüche, bei welchem der Verbindungssteg (16) der Befestigungsvorrichtung (10) mittig zur Einsteckplatte (14) mit dieser verbunden ist.

17. Wärmedämmverbundsystem (32) nach einem der Ansprüche 1 bis 15, bei welcher der Verbindungssteg (16) zwischen 1 cm und 2 cm zur Mitte der Einsteckplatte (14) versetzt mit dieser verbunden ist.

18. Wärmedämmverbundsystem (32) nach einem der vorhergehenden Ansprüche, bei welchem der Wärmedämmkörper (20) aus synthetisch organischen Dämmstoffen, insbesondere Polystyrol-Hartschaum, Polystyrolpartikel-Schaum, Polystyrolextruder-Schaum, Polyurethan-Hartschaum und dergleichen, oder aus synthetisch anorganischen Dämmstoffen, insbesondere Mineralwolle, Mineralschaum, Schaumglas und dergleichen, hergestellt ist.

19. Wärmedämmverbundsystem (32) nach einem der vorhergehenden Ansprüche, bei welchem die Vielzahl von Wärmedämmkörpern (20) übereinander und nebeneinander angeordnet sind.

20. Wärmedämmverbundsystem (32) nach Anspruch 19, ferner mit wenigstens einem Isolationselement (30), welches in einem Bereich zwischen den übereinander und/oder nebeneinander angeordneten Wärmedämmkörpern (20) und der Aussenwand (22) positioniert ist.

21. Wärmedämmverbundsystem (32) nach Anspruch 20, bei welchem das Isolationselement (30) aus einem schlauchförmigen elastischen Material erstellt ist, welches dazu ausgelegt ist, in einem Zwischenraum zwischen dem Wärmedämmkörper (20) und der Aussenwand (22) des Gebäudes (34) elastisch eingespannt zu werden.

22. Wärmedämmverbundsystem (32) nach Anspruch 20, bei welchem das Isolationselement (30) aus einem elastischen Material erstellt ist, welches an zumindest einer Seite mit einer Klebefläche versehen ist, wobei das Isolationselement (30) dazu ausgelegt ist, mittels der Klebefläche mit einer der Aussenwand (22) des Gebäudes (34) zugewandten Fläche des Wärmedämmkörpers (20) verklebt zu werden.

23. Wärmedämmverbundsystem (32) nach einem der vorhergehenden Ansprüche, ferner mit einem Unterlegkeil, welcher dazu ausgelegt ist, zwischen der Fixierplatte (12) und der Aussenwand (22) des Gebäudes (34) zwischengesetzt zu werden und einen Winkel zwischen der Fixierplatte (12) und der Aussenwand (22) des Gebäudes (34) einzustellen.

24. Gebäude (34) mit einem Wärmedämmverbundsystem (32) nach einem der vorhergehenden Ansprüche.

25. Verfahren zum Erstellen eines Wärmedämmverbundsystems (32) nach einem der Ansprüche 1 bis 23 mit den Schritten:
a) Einbringen von wenigstens einem zweiten Schlitz (26) in einen jeweiligen der Wärmedämmkörper (20);
b) Relative Ineingriffnahme zwischen der Befestigungsvorrichtung (10) und dem Wärmedämmkörper (20) derart, dass die Einsteckplatte (14) in den ersten Schlitz (24) und der Verbindungssteg (16) vollständig in den zweiten Schlitz (26) eingreifen;
c) Fixieren der Fixierplatte (12) der mit dem Wärmedämmkörper (20) in Eingriff gebrachten Befestigungsvorrichtung (10) an der Aussenwand (22) des Gebäudes (34).

## Claims

1. Thermal insulation composite system (32), comprising a plurality of panel-shaped thermal insulation bodies (20) and a plurality of fixing devices (10) for fixing the thermal insulation bodies (20) to an external wall (22) and/or an internal wall and/or a ceiling of a building (34), wherein
each of the fixing devices (10) comprises a fixing plate (12) for fixing the fixing device (10) to the external wall (22), a connecting bridge (16) mounted on a surface side of the fixing plate (12), and an insert plate (14) fixed to the fixing plate (12) via the connecting bridge (16) in a plane substantially parallel to the fixing plate; and
in each of the thermal insulation bodies (20) at least one first slot (24) is made which substantially corresponds to the thickness of the insert plate (14);
wherein at least a first portion of the insert plate (14) is formed for relative engagement in the first slot (24) of at least a first of the thermal insulation bodies (20); **characterized in that**, when installed, the connecting bridge (16) is in complete relative engagement with a second slot (26) of the at least one first thermal insulation body (20), which second slot substantially corresponds to the thickness of the connecting bridge (16) and can be or is incorporated in the thermal insulation body (20) so as to be aligned perpendicularly to the first slot (24).

2. Thermal insulation composite system (32) according to claim 1, in which the connecting bridge (16) of the fixing device (10) is formed, with complete engagement in the second slot (26) of the at least one first thermal insulation body (20), to finish so as to be flush with an upper side of the at least one first thermal insulation body (20).

3. Thermal insulation composite system (32) according to claim 1 or 2, in which the connecting bridge (16) of the fixing device (10) is formed, with complete engagement in the second slot (26) of the at least one first thermal insulation body (20), to come to rest against a bottom of the second slot (26) that can be made in the thermal insulation body (20).

4. Thermal insulation composite system (32) according to any of the preceding claims, in which the connecting bridge (16) of the fixing device (10) has a length in the range between 4 cm and 6 cm.

5. Thermal insulation composite system (32) according to any of the preceding claims, in which the insert plate (14) is formed in such a manner that with complete engagement with the at least one first thermal insulation body (20), a second portion of the insert plate (14) projects beyond an area of the thermal insulation body (20).

6. Thermal insulation composite system (32) according to claim 5, in which the second portion of the insert plate (14) is formed for relative engagement in a slot of at least one second thermal insulation body, which slot substantially corresponds to the thickness of the insert plate (14), which second thermal insulation body can be placed above or below the first thermal insulation body (20).

7. Thermal insulation composite system (32) according to any of the preceding claims, in which the connecting bridge (16) is formed so as to be plate-shaped.

8. Thermal insulation composite system (32) according to claim 7, in which, in a state in which the fixing device (10) is fixed to the external wall (22), the respective bottom of the fixing plate and/or of the plate-shaped connecting bridge (16) and/or of the insert plate (14) finish off so as to be flush relative to each other.

9. Thermal insulation composite system (32) according to any of the preceding claims, in which the distance between the surface of the fixing plate (12) and the surface of the insert plate (14) correspond to the length of the second slot (26) that can be made in the thermal insulation body (20).

10. Thermal insulation composite system (32) according to any of the preceding claims, in which the insert plate (14), in a state in which the fixing device (10) is fixed to the external wall (22), comprises triangular openings at the top and/or at the bottom.

11. Thermal insulation composite system (32) according to any of the preceding claims, in which the connecting bridge (16), in a state in which the fixing device (10) is fixed to the external wall (22), comprises triangular openings at the bottom.

12. Thermal insulation composite system (32) according to any of the preceding claims, in which the fixing plate (14) comprises at least one bore (18) through which a fixing element (28) for fixing the fixing device (10) to the external wall (22) can be inserted.

13. Thermal insulation composite system (32) according to any of the preceding claims, in which the insert plate (14) of the fixing device (10) comprises through-holes for the removal of water vapour formed by water vapour diffusion.

14. Thermal insulation composite system (32) according to any of the preceding claims, in which the fixing device (10) is made of metal or plastic.

15. Thermal insulation composite system (32) according to any of the preceding claims, in which the insert plate (14) of the fixing device (10) has a length between 8 cm and 12 cm and has a width between 4 cm and 6 cm.

16. Thermal insulation composite system (32) according to any of the preceding claims, in which the connecting bridge (16) of the fixing device (10) is connected to the insert plate (14) in the centre of said insert plate.

17. Thermal insulation composite system (32) according to any of claims 1 to 15, in which the connecting bridge (16) is connected to the insert plate (14) so as to be offset between 1 cm and 2 cm relative to the centre of said insert plate.

18. Thermal insulation composite system (32) according to any of the preceding claims, in which the thermal insulation body (20) is manufactured from synthetic organic insulation materials, in particular polystyrene hard foam, polystyrene particle foam, polystyrene extruder foam, polyurethane hard foam and the like, or from synthetic inorganic insulation materials, in particular mineral wool, mineral foam, foam glass and the like.

19. Thermal insulation composite system (32) according to any of the preceding claims, in which the plurality of thermal insulation bodies (20) are arranged one on top of the other and one next to the other.

20. Thermal insulation composite system (32) according to claim 19, further comprising at least one insulation element (30) which is positioned in a region between the thermal insulation bodies (20), arranged one on top of the other and/or one next to the other, and the external wall (22).

21. Thermal insulation composite system (32) according to claim 20, in which the insulation element (30) is made from a tubular elastic material that is formed to be elastically clamped in a space between the thermal insulation body (20) and the external wall (22) of the building (34).

22. Thermal insulation composite system (32) according to claim 20, in which the insulation element (30) is made from an elastic material that at least on one side comprises an adhesive surface, wherein the insulation element (30) is formed, by means of the adhesive surface, to be bonded to a surface of the thermal insulation body (20) facing the external wall (22) of the building (34).

23. Thermal insulation composite system (32) according to any of the preceding claims, further comprising a support wedge which is formed to be placed between the fixing plate (12) and the external wall (22) of the building (34) and to set an angle between the fixing plate (12) and the external wall (22) of the building (34).

24. Building (34) comprising a thermal insulation composite system (32) according to any of the preceding claims.

25. Method for producing a thermal insulation composite system (32) according to any of claims 1 to 23, involving the steps of:
a) incorporating at least a second slot (26) in one of the respective thermal insulation bodies (20) ;
b) relative engagement between the fixing device (10) and the thermal insulation body (20) in such a manner that the insert plate (14) engages in the first slot (24) and the connecting bridge (16) completely engages in the second slot (26);
c) fixing the fixing plate (12) of the fixing device (10) that has been made to engage with the thermal insulation body (20) to the external wall (22) of the building (34).

## Revendications

1. Système composite d'isolation thermique (32), comprenant une pluralité de corps d'isolation thermique en forme de plaques (20) et une pluralité de dispositifs de fixation (10) pour fixer les corps d'isolation thermique (20) à un mur externe (22) et/ou à un mur interne et/ou au toit d'un bâtiment (34), dans lequel chacun des dispositifs de fixation (10) contient une plaque de fixation (12) pour fixer le dispositif de fixation (10) au mur externe (22), une entretoise de liaison (16) appliquée sur une face de la plaque de fixation (12), et une plaque enfichable (14), qui, via l'entretoise de liaison (16), est fixée, dans un plan sensiblement parallèle à la plaque de fixation (12), à celle-ci ; et dans chacun des corps d'isolation thermique (20) est ménagée une première fente (24) correspondant sensiblement à l'épaisseur de la plaque enfichable (14) ; dans lequel au moins une première section de la plaque enfichable (14) est formée pour l'insertion relative dans la première fente (24) d'au moins un premier des corps d'isolation thermique (20) ; **caractérisé en ce que**, à l'état assemblé, l'entretoise de liaison (16) est en engagement relatif complet avec une deuxième fente (26) du au moins un premier corps d'isolation thermique (20), correspondant sensiblement à l'épaisseur de l'entretoise de liaison (16), laquelle fente peut être enfichée ou est enfichée dans le corps d'isolation thermique (20) avec une orientation perpendiculaire à la première fente (24).

2. Système composite d'isolation thermique (32) selon la revendication 1, dans lequel l'entretoise de liaison (16) du dispositif de fixation (10) est conçue pour l'engagement complet dans la deuxième fente (26) du au moins un premier corps d'isolation thermique (20) de manière à se bloquer à fleur avec une face supérieure du au moins un premier corps d'isolation thermique (20).

3. Système composite d'isolation thermique (32) selon la revendication 1 ou 2, dans lequel l'entretoise de liaison (16) du dispositif de fixation (10) est conçue, pour l'engagement complet dans la seconde fente (26) du au moins un premier corps d'isolation thermique (20) de manière à s'abouter contre une face inférieure de la seconde fente (26) enfichable dans le corps d'isolation thermique (20).

4. Système composite d'isolation thermique (32) selon l'une quelconque des revendications précédentes, dans lequel l'entretoise de liaison (16) du dispositif de fixation (10) a une longueur dans une plage comprise entre 4 cm et 6 cm.

5. Système composite d'isolation thermique (32) selon l'une quelconque des revendications précédentes, dans lequel la plaque enfichable (14) est conçue de sorte que, pour l'engagement complet avec le au moins un premier corps d'isolation thermique (20), une seconde section de la plaque enfichable (14) dépasse d'une surface du corps d'isolation thermique (20).

6. Système composite d'isolation thermique (32) selon la revendication 5, dans lequel la seconde section de la plaque enfichable (14) est conçue pour un engagement relatif dans une fente correspondant sensiblement à l'épaisseur de la plaque enfichable (14) d'au moins un second corps d'isolation thermique qui peut être disposé au-dessus ou en dessous du premier corps d'isolation thermique (20).

7. Système composite d'isolation thermique (32) selon l'une quelconque des revendications précédentes, dans lequel l'entretoise de liaison (16) est conçue en forme de plaque.

8. Système composite d'isolation thermique (32) selon la revendication 7, dans lequel, dans un état du dispositif de fixation (10) fixé au mur externe (22), les parties inférieures respectives de la plaque de fixation et/ou de l'entretoise de liaison en forme de plaque (16) et/ou de la plaque enfichable (14) se bloquent mutuellement à fleur.

9. Système composite d'isolation thermique (32) selon l'une quelconque des revendications précédentes, dans lequel la distance entre la surface de la plaque de fixation (12) et la surface de la plaque enfichable (14) correspond exactement à la longueur de la seconde fente (26) enfichable dans le corps d'isolation thermique (20).

10. Système composite d'isolation thermique (32) selon l'une quelconque des revendications précédentes, dans lequel la plaque enfichable (14) est conçue, dans un état du dispositif de fixation (10) fixé au mur externe (22), sur la face supérieure et/ou la face inférieure, avec des cavités de forme triangulaire.

11. Système composite d'isolation thermique (32) selon l'une quelconque des revendications précédentes, dans lequel l'entretoise de liaison (16) est conçue, dans un état du dispositif de fixation (10) fixé au mur externe (22), sur la face inférieure, avec des cavités de forme triangulaire.

12. Système composite d'isolation thermique (32) selon l'une quelconque des revendications précédentes, dans lequel la plaque de fixation (14) est pourvue d'au moins un alésage (18), à travers lequel peut être enfiché un élément de fixation (28) pour la fixation du dispositif de fixation (10) sur le mur externe (22).

13. Système composite d'isolation thermique (32) selon l'une quelconque des revendications précédentes, dans lequel la plaque enfichable (14) du dispositif de fixation (10) est pourvue d'alésages traversants pour évacuer la vapeur d'eau formée par diffusion de la vapeur d'eau.

14. Système composite d'isolation thermique (32) selon l'une quelconque des revendications précédentes, dans lequel le dispositif de fixation (10) est constitué de métal ou d'une matière plastique.

15. Système composite d'isolation thermique (32) selon l'une quelconque des revendications précédentes, dans lequel la plaque enfichable (14) du dispositif de fixation (10) présente une longueur entre 8 cm et 12 cm et une largeur entre 4 cm et 6 cm.

16. Système composite d'isolation thermique (32) selon l'une quelconque des revendications précédentes, dans lequel l'entretoise de liaison (16) du dispositif de fixation (10) est reliée au centre de la plaque enfichable (14) à celle-ci.

17. Système composite d'isolation thermique (32) selon l'une quelconque des revendications 1 à 15, dans lequel l'entretoise de liaison (16), décalée d'une distance entre 1 cm et 2 cm du centre de la plaque enfichable (14), est reliée à celle-ci.

18. Système composite d'isolation thermique (32) selon l'une quelconque des revendications précédentes, dans lequel le corps d'isolation thermique (20) est fabriqué à partir d'isolants organiques synthétiques, en particulier de mousse dure de polystyrène, de mousse de particules de polystyrène, de mousse d'extrusion de polystyrène, de mousse dure de polyuréthane et similaires, ou d'isolants inorganiques synthétiques, en particulier de laine minérale, d'une mousse minérale, de verre mousse et similaires.

19. Système composite d'isolation thermique (32) selon l'une quelconque des revendications précédentes, dans lequel la pluralité de corps d'isolation thermique (20) est agencée avec les corps disposés l'un au-dessus de l'autre et l'un à côté de l'autre.

20. Système composite d'isolation thermique (32) selon la revendication 19, muni en outre d'au moins un élément d'isolation (30), qui est positionné dans une zone comprise entre les corps d'isolation thermique (20) agencés l'un au-dessus de l'autre et/ou l'un à côté de l'autre et le mur extérieur (22).

21. Système composite d'isolation thermique (32) selon la revendication 20, dans lequel l'élément d'isolation (30) est formé d'un matériau élastique tubulaire, qui est conçu de façon à être enserré de manière élastique dans un espace intermédiaire entre le corps d'isolation thermique (20) et le mur extérieur (22) du bâtiment (34).

22. Système composite d'isolation thermique (32) selon la revendication 20, dans lequel l'élément d'isolation (30) est formé d'un matériau élastique qui est pourvu sur au moins une face d'une surface collante, dans lequel l'élément d'isolation (30) est conçu de manière à être collé au moyen de la surface collante à une face du corps d'isolation thermique (20) tournée vers le mur extérieur (22) du bâtiment (34).

23. Système composite d'isolation thermique (32) selon l'une quelconque des revendications précédentes, équipé en outre d'un sabot d'arrêt, qui est conçu pour être intercalé entre la plaque de fixation (12) et le mur extérieur (22) du bâtiment (34) et établir un angle entre la plaque de fixation (12) et le mur extérieur (22) du bâtiment (34).

24. Bâtiment (34) avec un système composite d'isolation thermique (32) selon l'une quelconque des revendications précédentes.

25. Procédé d'établissement d'un système composite d'isolation thermique (32) selon l'une quelconque des revendications 1 à 23, avec les étapes consistant à :
a) enficher au moins une seconde fente (26) dans l'un respectif des corps d'isolation thermique (20) ;
b) assurer un engagement relatif entre le dispositif de fixation (10) et le corps d'isolation thermique (20) de sorte que la plaque enfichable (14) s'engage dans la première fente (24) et que 1'entretoise de liaison (16) s'engage complètement dans la seconde fente (26) ;
c) fixer la plaque de fixation (12) du dispositif de fixation (10) engagé sur le corps d'isolation thermique (20) au mur extérieur (22) du bâtiment (34).
